# EUROPEAN PATENT APPLICATION

(11) **EP 4 530 805 A1**
(43) Date of publication of application: **02.04.2025**
(21) Application number: 24202616.9
(22) Date of filing: 25.09.2024
(51) Int. Cl.: G06F 3/01, G02B 27/01, G06T 19/00

(54) **OPTICAL ARTIFACT MITIGATION AND CONTENT DISPLAY ENHANCEMENT**

(30) Priority: 26.09.2023 US 202363540460 P; 09.09.2024 US 202418828527
(71) Applicant: Apple Inc., Cupertino, CA 95014 (US)
(72) Inventor: MELAX, Stanley K., Los Gatos (US); MIRHOSSEINI, Seyedpooya, Santa Clara (US); YANG, Fuyi, San Jose (US); MIRHOSSEINI, Seyedkoosha, Santa Clara (US); FLEISCHMAN, Dagny, Campbell (US); COOK, David M., Broomfield (US); KURLETHIMAR, Yashas Rai, San Jose (US); WANG, Xin, Cupertino, 95014 (US); BROWN, Travis W., Boulder (US); AROYAN, Ara H., Redwood City (US); CHANG, Jin Wook, San Jose (US); HADDADI, Abbas, San Jose (US); LI, Yang, San Jose (US); BERARDINO, Alexander G., San Francisco (US); SUKAN, Mengu, Sunnyvale (US); DRESHAJ, Ermal, San Jose (US); YANNY, Kyrollos, Cupertino (US); SPRAGUE, William W., San Francisco (US)
(74) Representative: COPA Copenhagen Patents

(57) **Abstract**

Various implementations disclosed herein include devices, systems, and methods that present content items (e.g., movies, TV shows, home-made videos, etc.) on electronic devices such as HMDs. Some implementations adjust what is being displayed by the electronic devices to mitigate optical module-based artifacts (e.g., ghosting). For example, in an HMD with a catadioptric lens, a mirror layer may leak some light to produce ghosting artifacts that may be mitigated by adjusting brightness, dynamic range, contrast, light-spill, color, etc. Some implementations utilize adjustments that are based on content item awareness (e.g., adjustments based on the peak brightness of the scene in a movie that is being displayed within an extended reality (XR) environment, etc.). Some implementations provide adjustments based on environment awareness (e.g., how dark is the surroundings or pass-through environment) and/or optical module modeling. The adjustments may change a particular content item and/or an environment in which it is presented.

## Description

### TECHNICAL FIELD

The present disclosure generally relates to systems, methods, and devices that mitigate optical artifacts that may occur in the presentation of content items (e.g., movies, TV shows, etc.) within extended reality (XR) environments and/or provide other content display enhancements on electronic devices such as head-mounted devices (HMD).

### BACKGROUND

Displaying content on electronic devices may result in various optical artifacts and other undesirable characteristics. For example, in an HMD with a catadioptric lens, a mirror layer may leak some light to produce ghosting artifacts. Existing techniques may not adequately, efficiently, or effectively mitigate for these and other optical artifacts and undesirable characteristics.

### SUMMARY

Various implementations disclosed herein include devices, systems, and methods that present content items (e.g., movies, TV shows, home-made videos, etc.) on electronic devices such as HMDs. Some implementations adjust what is being displayed by the electronic devices to mitigate optical module-based artifacts (e.g., ghosting). For example, in an HMD with a catadioptric lens, a mirror layer may leak some light to produce ghosting artifacts that may be mitigated by adjusting brightness, dynamic range, contrast, light-spill, color, etc. Some implementations utilize adjustments that are based on content item awareness (e.g., adjustments based on the peak brightness of the scene in a movie that is being displayed within an extended reality (XR) environment, etc.). Some implementations provide adjustments based on environment awareness (e.g., how dark is the virtual surroundings or pass-through environment around a content item). Some implementations provide adjustments based on optical module modeling. Some implementations provide adjustments based on viewing circumstances such as where the user is gazing. The mitigating adjustments may change a particular content item and/or an environment in which it is presented. The adjustment may be determined to preserve artist intent, based on type of content, and/or using other criteria.

In some implementations, an electronic device has a processor (e.g., one or more processors) that executes instructions stored in a non-transitory computer-readable medium to perform a method. The method performs one or more steps or processes. In some implementations, the method involves obtaining a content item to render within a view of an XR environment (e.g., a movie, TV show, app, etc. which may be rendered in an immersive view or within a virtual or real environment).

The method may involve identifying a visual characteristic (e.g., type of content, type of scene, peak brightness, minimum brightness, a brightness histogram, etc.) of the content item. The characteristic may be determined based on content metadata and/or environment metadata that is specific to one or more frames or scenes, a histogram or spatial analysis of content brightness, etc. Such metadata may identify locations within a content item, e.g., x/y positions, at which particular brightness features occur.

The method may involve determining a display parameter of the view to mitigate an appearance of an optical artifact associated with the identified visual characteristic of the segment of the content item. The display parameter may correspond to adjusting brightness (e.g., to drop the brightness of a highlight or hide a reflection by reducing brightness in an area of reflection/artifact), dynamic range (e.g., fitting/mapping the view to a particular range), black level, contrast, color, tinting, etc. of the content item or (if applicable) the environment around the content item (e.g., light-spill, tinting, etc.). Adjustments may be smoothed (e.g., across multiple frames) or timed to occur on scene changes to avoid noticeable changes)). The method further involves presenting, via a display, the view with the content item within the XR environment in accordance with the determined display parameter.

Some implementations adjust what is being displayed on an electronic device such as an HMD to mitigate optical module-based artifacts (e.g., ghosting). Adjustments may be based on optical module modeling, including, but not limited to modeling that accounts for the relative positioning of a display panel and/or an eye of the viewing user. An optical stack model (e.g., a 3D model used to trace rays from display positions to a user eye position) may be used to predict where and how strong artifacts may occur.

In some implementations, an electronic device has a processor (e.g., one or more processors) that executes instructions stored in a non-transitory computer-readable medium to perform a method. The method performs one or more steps or processes. In some implementations, the method involves obtaining a content item to render within a view of an XR environment. The method may involve predicting a characteristic (e.g., noticeability, brightness, size, location, etc.) of an optical artifact of the content item. The characteristic of the optical artifact may be predicted based on modeling light paths using a 3D model of an optical module of the HMD and an eye position relative to the 3D model The method may involve, based on the predicted characteristic, determining a display parameter of the view to mitigate an appearance of the optical artifact. The method may involve presenting, via a display, the view with the content item within the XR environment in accordance with the determined display parameter.

In some implementations, a content item is presented within an XR environment and one or more effects are applied to the XR environment, e.g., changing the appearance of the content item and/or around a window or virtual screen upon which the content item is presented. In some implementations, the content item is presented within pass-through video that is modified with one or more enhancements or other effect. For example, an effect may be used to alter a view of live pass-through video with a content item displayed on a virtual screen positioned to appear at position within the environment depicted by the pass-through video and a light-spill effect may be applied to the pass-through video around the virtual screen. In the pass-through implementations, the effect may be added by changing a display attribute of the pass-through content around the object. In some implementations, a light-spill effect may be added by modifying a display attribute of a portion of the live pass-through content (e.g., a wall, a floor, furniture, etc.) located around or adjacent to the content item. In other examples, an effect may utilize a display parameter that adjusts, *inter alia,* a color attribute, a tinting attribute, a dimming attribute, a light glow attribute, etc.

In some implementations, a hardware blend architecture (e.g., blend circuitry) implemented process may be used to blend pass-through video frames of live pass-through video content with content of the virtual object. The blending process may be further configured to implement an effect such as a light-spill effect. In some implementations, the blending process may include a tinting/color mixing process using hardware-based logical pixel operations. The blending process may include any type of blending technique.

Some implementations provide gaze-based contrast adjustment to provide an enhanced user experience. In some implementations, an identified gaze direction may be used to identify a peripheral portion of a view, and local contrast may be suppressed in that portion. In one example, local contrast may be preserved in a fovea portion of a view while local contrast may be flattened in portion of a view corresponding to peripheral vision. In some implementations, an electronic device has a processor (e.g., one or more processors) that executes instructions stored in a non-transitory computer-readable medium to perform a method. The method performs one or more steps or processes. In some implementations, the method may involve obtaining a content item to render within a view of an extended reality (XR) environment on an HMD. The method may involve identifying a gaze direction of a user of the HMD. The method may involve identifying a portion of the view associated with peripheral vision based on the gaze direction. The method may involve presenting, via the display, the view with the content item within the XR environment, where the portion of the view associated with peripheral vision is adjusted according to a display parameter. In some implementations, the display parameter specifies flattening contrast within the portion of the view associated with peripheral vision. In some implementations, the display parameter specifies dimming the portion of the view associated with peripheral vision.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 illustrates an exemplary electronic device operating in a physical environment in accordance with some implementations.
Figure 2 illustrates a view of an XR environment provided by the device of Figure 1, in accordance with some implementations.
Figure 3 illustrates an optical artifact in the view of the XR environment of Figure 2.
Figure 4 illustrates a mitigation of the optical artifact of the view of Figure 3 in accordance with some implementations.
Figure 5 illustrates an optical artifact in the view of the XR environment of Figure 2.
Figure 6 illustrates a mitigation of the optical artifact of the view of Figure 5 in accordance with some implementations.
Figure 7 illustrates a view of the XR environment of Figure 2.
Figure 8 illustrates an enhancement to the view of Figure 7 in accordance with some implementations.
Figure 9 illustrates a lens double bounce ghost artifact produced by an exemplary optical module of an electrical device.
Figure 10 illustrates an optical artifact prediction based on optical module modeling in accordance with some implementations.
Figure 11 illustrates an optical artifact resulting from a lens double bounce.
Figure 12 is a flowchart illustrating an exemplary method of mitigating an optical artifact, in accordance with some implementations.
Figure 13 is a flowchart illustrating another exemplary method of mitigating an optical artifact, in accordance with some implementations.
Figure 14 is a flowchart illustrating an exemplary method of display enhancement, in accordance with some implementations.
Figure 15 is a block diagram of an electronic device of in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

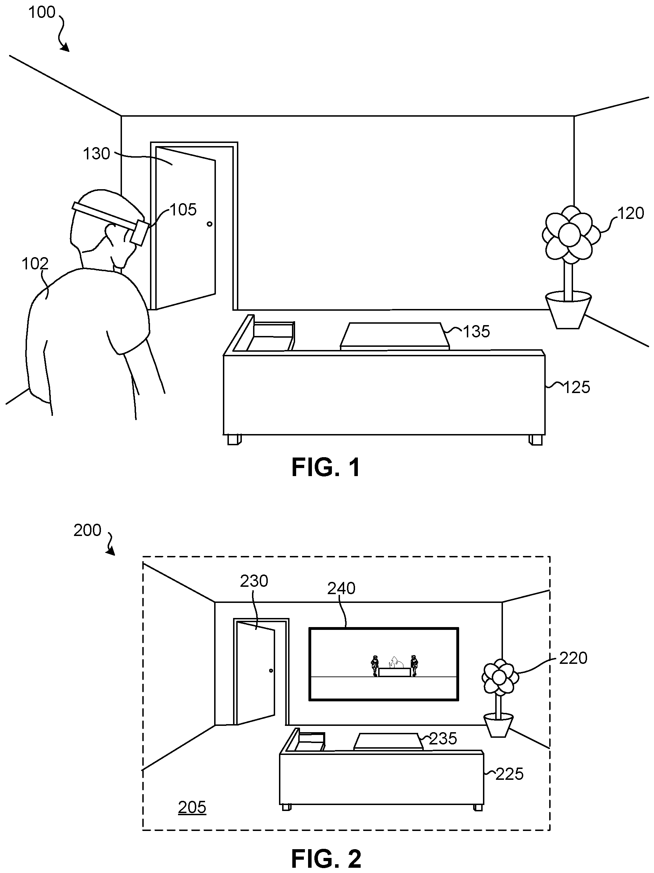

**Figure** 1 illustrates an exemplary electronic device 105 operating in a physical environment 100. In the example of Figure 1, the physical environment 100 is a room with a plant 120, a sofa 125, a door 130, and a table 135. The electronic device 105 may include one or more cameras, microphones, depth sensors, or other sensors that can be used to capture information about and evaluate the physical environment 100 and the objects within it, as well as information about the user 102 of electronic device 105. The information about the physical environment 100 and/or user 102 may be used to provide visual and audio content and/or to identify the current location of the physical environment 100 and/or the location of the user within the physical environment 100.

In some implementations, views of an extended reality (XR) environment may be provided to one or more participants (e.g., user 102 via the electronic device 105 and/or other participants not shown via other electronic devices not shown). Such an XR environment may be a 3D environment that is generated based on camera images and/or depth camera images of the physical environment 100 as well as a representation of user 102 based on camera images and/or depth camera images of the user 102. Such an XR environment may include virtual content (e.g., one or more virtual content items) that is positioned at one or more 3D locations relative to a 3D coordinate system associated with the XR environment, which may correspond to a 3D coordinate system of the physical environment 100. In one example, an XR environment includes a virtual content item displayed within an entirely virtual surrounding environment. In one example, an XR environment includes a virtual content item displayed within an entirely real surrounding environment (e.g., via pass-through or see-through portions of an HMD). In one example, an XR environment includes a virtual content item displayed within a surrounding environment that includes both real and virtual elements. In one example, an XR environment provides an immersive view of only a virtual content item, i.e., without a surrounding environment. In views of an XR environment, the appearance of the content item and/or the surrounding environment may be configured or modified to present mitigations (e.g., light-spill, lighting effects, etc.) to mitigate the appearance of artifacts and/or to otherwise enhance the view or experience.

In some implementations, an XR environment is presented using pass-through video that depicts a physical environment (e.g., physical environment 100). Pass-through video, for example, may be provided based on receiving and presenting images from an image sensor (e.g., outward-facing cameras) of a device (e.g., device 105). In some implementations, a virtual content item is presented with the pass-through video content and one or more mitigations (e.g., display parameter selections or changes) are generated to change the appearance of a virtual content item and/or the portions of the view around or adjacent to the content item.

Optical artifact mitigations may take various forms. In some implementations, artifact mitigation is provided by configuring a light-spill effect. A light-spill effect may be configured with respect to size, location, brightness, color, etc. to alter the appearance of pass-through video to reduce the appearance of an optical artifact. A light-spill effect may involve changing the appearance of a portion of a view (e.g., by tinting and/or changing brightness) for example based on the content that is displayed as a virtual content item, e.g., based on the content item's brightness attributes, colors, etc. A light-spill effect may be presented in a realistic manner, e.g., presenting virtual light-spill that is similar to the light-spill that a real TV, etc. might provide. In some implementations, a light-spill effect may be enabled with respect to pass-through video content via usage of a reconstructed geometric mesh (e.g., providing surface normal or other environment surface information that may be used to provide or enhance lighting effects). In some implementations, a light-spill effect (e.g., tinting/color mix) is generated (e.g., using hardware-based logical pixel operations) by altering the appearance of frames of pass-through video (of a physical environment) that was captured via outward-facing cameras (of an HMD) connected to a display (of the HMD) via a dedicated hardware path of an application specific integrated circuit (ASIC).

A processor may be configured to process frames of pass-through video at a relatively high frames per second (FPS) rate such as, e.g., a frame rate greater than 60 FPS. In some implementations, an ASIC retrieves each frame (of the pass-through video) from the outward-facing cameras and alters each pass-through frame with frame-specific effects. The process may include an alpha blending process for combining each of the frames of the pass-through video (e.g., background content) with the frame-specific virtual content. In some implementations, alpha-blend values associated with the pass-through video in areas corresponding to a virtual content item and/or surrounding areas may be adjusted. In some implementations, using a hardware-based process to blend pass-through frames with virtual content may enable a process for adding the virtual content item and optical artifact mitigating effects quickly, e.g., in real-time live views, and/or using fewer resources than might otherwise be required.

Altering a portion of each of the frames of the pass-through video may be executed via operation of a processor (e.g., an ASIC) and may include, but is not limited to including, tinting, dimming, or changing a brightness of a respective portion of each of the frames. In some implementations, the altering process may include performing a hardware-implemented logic operation via an ASIC.

Various techniques may be used to provide artifact mitigation. Some techniques are gaze and content agnostic. For example, such techniques may involve changing viewing position or size of an area (e.g., a virtual screen) upon which virtual content is positioned. This may involve changing the absolute position and/or size of the area/screen or changing the position and/or size of the area screen relate to the user's viewpoint, e.g., within an XR environment. In another example, such techniques involve changing an XR environment's surround brightness, for example, by increasing or decreasing environment luminance in a way that is independent of the virtual content.

Some techniques used to provide artifact mitigation are content dependent. For example, based on the type and/or characteristics of a virtual content item, the tone mapping of the content may be adjusted to reduce the artifact noticeability. In another example, based on the type and/or characteristics of a virtual content item, a light-spill effect is utilized to mitigate artifact noticeability. This may involve, as example, controlling the amplitude of the light-spill and/or the extent (e.g., spatial region affected) of the spill based on the virtual content. In another example, based on the type and/or characteristics of the virtual content item, the brightness of XR environment's surround environment may be adjusted. This may involve dynamically adjusting the luminance.

Some techniques used to provide artifact mitigation are gaze dependent. For example, gaze-based dimming may be employed to reduce the noticeability of artifacts. Dimming may be employed selectively, for example, based on identify a region such as a foveated gaze zone around a user's gaze direction. Some implementations involve controlling the structure of temporal filtering.

Some techniques used to provide artifact mitigation are gaze and content dependent. For example, based on both virtual content item type/characteristics and gaze, adjustments may be made. This may involve, for example, foveated tone-mapping, e.g., tone mapping some or all of the content (e.g., only particular regions based on the user's gaze/foveal gaze zones). This may involve altering the tones based on actual pixel values. Another example involves background subtraction based on virtual content item type/characteristics and gaze. Another example involves performing a foveated average pixel level (APL)-boost based on virtual content item type/characteristics and gaze, which may involve applying a boosting function with amplitude and/or size based on gaze/foveal zone and/or the virtual content.

Some techniques used to provide artifact mitigation are content and pupil position dependent. For example, based on both virtual content and the user's pupil positions, adjustments may be made based on a real-time computed image of the unwanted artifacts. This may involve, for example, (Ghost Cancellation) subtracting brightness from the background of the intended image (when available) that matches the unintended contribution (Ghost Prediction), that utilizes hardware and implementation to provide real-time lens-model pupil-size-beam trace that provides, per-pixel, a sufficient (non-uniform projective-geometry-based) 2nd-order point spread function to correctly model the non-linear lens dynamics which is then coupled with adaptive multiple anisotropic texture sampling over multiple mip levels in order to, for each color channel, sum all contributing light which also gets attenuated by reflection/transmission efficiencies (for the corresponding light path) provided by a ML model trained from polarized-light ray-trace simulations.

Some techniques used to provide artifact mitigation are content, pupil position, and gaze dependent.

**Figure 2** illustrates a view 200 of an exemplary XR environment provided by a device (e.g., device 105 of Figure 1). The view 200 of the XR environment includes (live) pass-through video 205 of a physical environment (e.g., physical environment 100 of Figure 1) and a virtual content item 240 (e.g., a Movie, TV show, etc.) presented within a 2D display window 240 positioned at a 3D location within the XR environment. The pass-through video 205 includes a depiction 220 of the flower 120, a depiction 225 of the sofa 125, a depiction 230 of the door 130, a depiction 235 of the table 135, etc. The virtual content item 240 may be fixed in its position relative to other objects in XR environment. Thus, as the user moves the device 105 around the physical environment 100 to view the XR environment from different viewpoints, the virtual content item 240 may appear to remain at a fixed position, e.g., being world-locked to appear to remain at a fixed position on the wall of the physical environment 100.

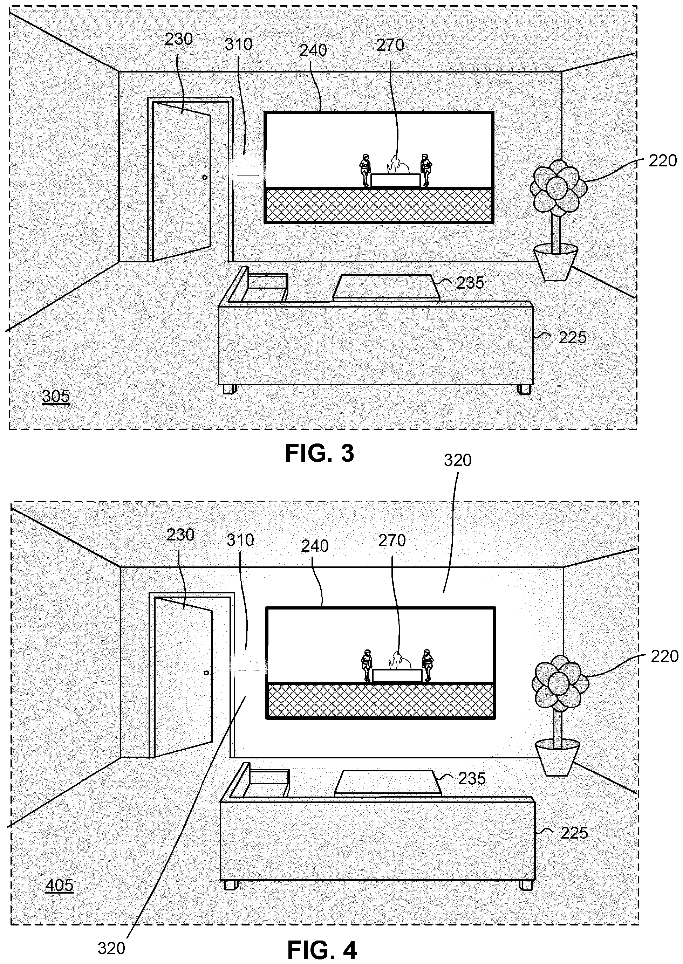

**Figure 3** illustrates an optical artifact 310 in a view 305 of the XR environment of Figure 2. In this example, the virtual content item 240 includes a depiction of a bright fire 270 and an optical artifact 310 (corresponding to the bright fire 270) is visible within the view 305 of the XR environment. In this example, the portion of view 305 surrounding the virtual content item 240 is relatively dim or dark, which enhances the visibility / noticeability of the optical artifact 310.

**Figure 4** illustrates a mitigation of the optical artifact 310 of a view 405 (which is a changed version of view 305 of Figure 3). In this example, the device determines one or more characteristics of the optical artifact 310 based on the content item 240, the surrounding environment (e.g., the pass-through views characteristics), and/or the optical module used by the device. The one or more characteristics of the optical artifact may, but do not necessarily, include how bright the artifact will be, the relative brightness of the artifact to nearby items, how large the artifact will be, the location of the optical artifact in the view (e.g., relative to the content item 240 or surrounding environment content), how noticeable the artifact is expected to be (e.g., on a numerical scale), other characteristics associated with noticeability of an artifact, etc.

The one or more characteristics of the optical artifact may be determined, for example, based on metadata that identifies peak brightness, average brightness, a histogram representing amounts of pixels within various brightness ranges of the content item, etc. brightness information regarding the current frame or scene of a movie in an example in which the movie is the content item 240.

The one or more characteristics of the optical artifact may be determined based on information about the surrounding environment (e.g., based on the display's current capabilities and/or dynamic range utilization, the lighting in the environment, etc.). Information about the surrounding environment may be determined by the device. For example, in the case of pass-through video, the device may analyze one or more frames of the pass-through video to identify brightness characteristics. Moreover, since pass-through video depicts a physical environment, information about the physical environment that is captured by other sensors (e.g., other than the camera capturing the pass-through video), such as ambient light sensors, motion sensors, depth sensors, heat sensors, etc., may be used to determine a scene understanding from which the information about the surrounding environment and/or the view of the surrounding environment may be determined.

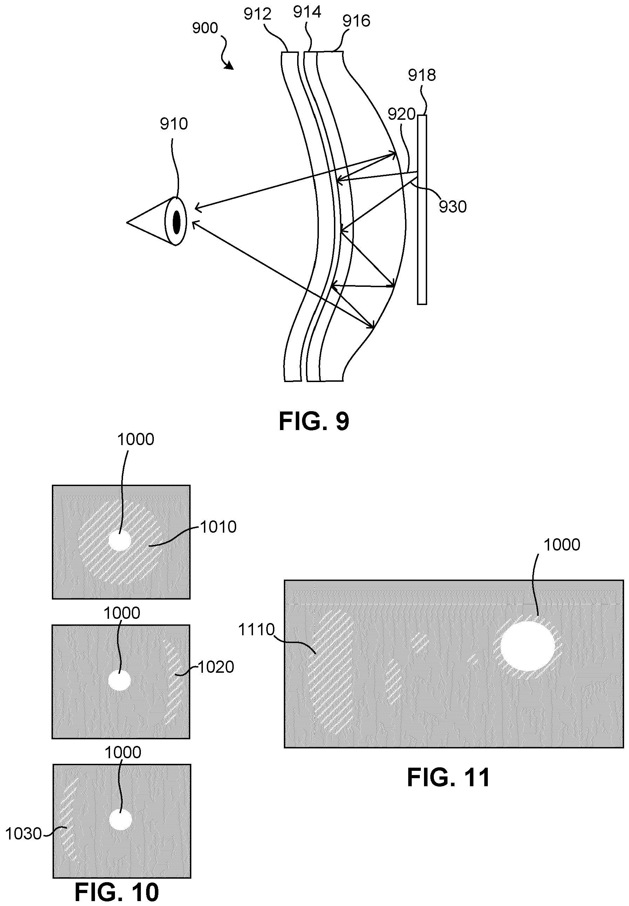

The one or more characteristics of the optical artifact may be determined based on information about the optical module used to view the view 305, e.g., using an optical module modeling technique that predicts the locations, size, intensity, etc. of expected artifacts via 3D modeling. For example, a 3D model of an optical module such as the exemplary optical module of Figure 9, may be used to model or simulate light reflections (e.g., intended reflections and unintended artifact reflections) to determine characteristics of an optical artifact, e.g., where the artifact is likely to appear, how large and/or bright the artifact will be, etc.

In the example of Figure 4, based on the one or more characteristics of the optical artifact, the device determines to provide a mitigation. In other circumstances (e.g., a less noticeable artifact), the device may determine to omit providing a mitigation. In this example of Figure 4, the mitigation is a light-spill effect 320 that masks or hides the appearance of the optical artifact 310. In this example, the light-spill effect 320 is provided by increasing the brightness and/or tinting the coloring in regions of the view proximate the virtual content item 240. The amount of increase and/or tinting may decrease based on distance away from the virtual content item 240 within the view 405. The light-spill effect 320 may give the appearance of virtual light emanating from the virtual content item 240 to illuminate nearby portions of the depicted environment.

A mitigation, such as the light-spill effect 320, may be configured based on one more characteristics of an optical artifact to hide or reduce the noticeability of the optical artifact. In this example, based on the optical artifact 310 being at a location proximate to the virtual content item (e.g., within a light-spill mitigation threshold distance) and the relative brightness to surrounding portions of the view (e.g., being at least a threshold level brighter than the surrounding portions), and/or having particular color(s) (e.g., being the white, yellow, etc. hues of fire), the device determines to apply a light-spill effect having a particular strength (e.g., strong enough such that the size of the light-spill causes it to overlap the optical artifact 310), brightness (e.g., bright enough to reduce the noticeability of the optical artifact 310), and/or having other configured attributes (e.g., using tinting or coloring consistent both with what is displayed in the content item 270 and also suitable to reduce the noticeability of the optical artifact).

In addition to this example, characteristics of an optical artifact may be used to configure a mitigation in numerous other ways.

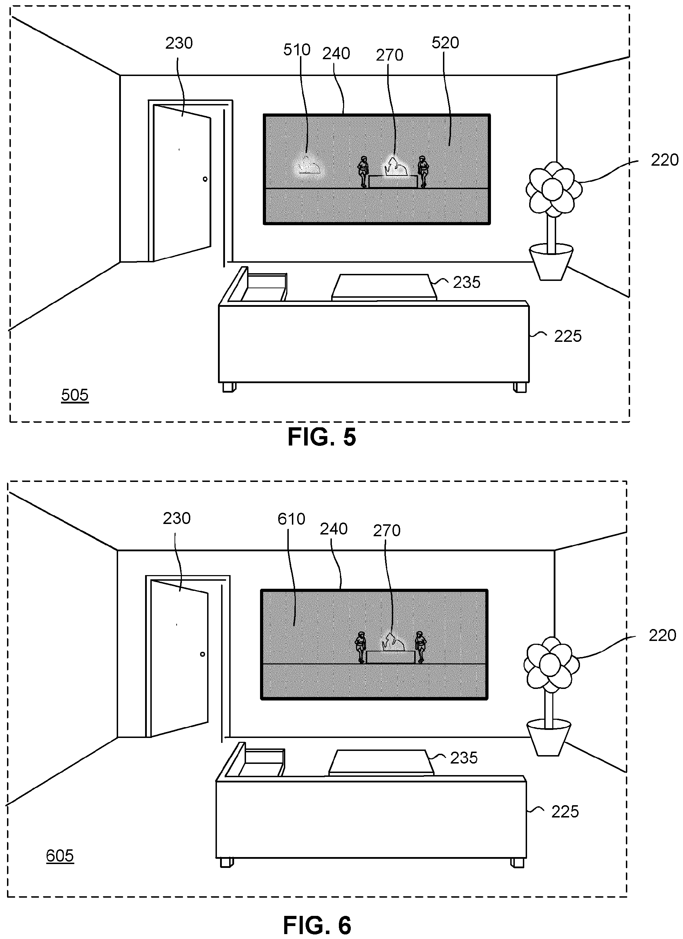

**Figure 5** illustrates an optical artifact 510 in a view of the XR environment of Figure 2. In this example, the virtual content item 240 includes a depiction of a bright fire 270 in a dark content scene 520 and an optical artifact 510 (corresponding to the bright fire 270) is visible within the view 505 of the XR environment. In this example, the portion of content item 240 around the fire 270 is relatively dark, which enhances the visibility / noticeability of the optical artifact 310 that overlies it.

**Figure 6** illustrates a mitigation of the optical artifact 610 of a view 605 (which is a changed version of view 505 of Figure 5). In this example, the device determines one or more characteristics of the optical artifact 510 based on the content item 240, the surrounding environment (e.g., the pass-through views characteristics), and/or the optical module used by the device. The one or more characteristics of the optical artifact may, but do not necessarily, include how bright the artifact will be, the relative brightness of the artifact to nearby items, how large the artifact will be, the location of the optical artifact in the view (e.g., relative to the content item 240 or surrounding environment content), how noticeable the artifact is expected to be (e.g., on a numerical scale), other characteristics associated with noticeability of an artifact, etc. As described with respect to Figure 4, one or more characteristics of an optical artifact (such as optical artifact 510) may be determined based on metadata that identifies peak brightness, average brightness, a histogram representing amounts of pixels within various brightness ranges of the content item, etc. brightness information regarding the current frame or scene of a movie in an example in which the movie is the content item 240. Similarly, as described with respect to Figure 4, one or more characteristics of an optical artifact (such as optical artifact 510) may be determined based on information about the surrounding environment and/or information about the optical module used to view the view, e.g., using an optical module modeling.

In the example of Figure 6, based on the one or more characteristics of the optical artifact, the device determines to provide a mitigation. In other circumstances (e.g., a less noticeable artifact), the device may determine to omit providing a mitigation. In this example of Figure 6, the mitigation alters a characteristic of the content item 240 to mask or hide the appearance of the optical artifact 510, e.g., to instead produce optical artifact 610 that is less bright than optical artifact 510. In this example, the peak brightness of the content item 240 (e.g., of fire 270) is reduced, resulting in a less bright optical artifact 610.

A mitigation, such as a content item change, may be configured based on one more characteristics of an optical artifact to hide or reduce the noticeability of the optical artifact. In this example, based on the optical artifact 510 being at a location within the content item 240 and the relative brightness to surrounding portions of the content item 240 (e.g., being at least a threshold level brighter than the surrounding portions), and/or having particular color(s) (e.g., being the white, yellow, etc. hues of fire), the device determines to reduce the brightness of the content item 240 (and/or the entire view 605) to reduce the brightness of the optical artifact 510 to that of optical artifact 610. Note that view 505 need never be presented, i.e., the device may predict the optical artifact 505 and adjust the content such that view 605 is presented instead of view 505.

In addition to this example, characteristics of an optical artifact may be used to configure a mitigation in numerous other ways.

Optical artifact mitigation can involve various adjustments. In the context of presenting virtual content items within views of XR environments, some adjustments involve content item adjustments (e.g., pixel-by-pixel adjustments of one or more frames of content item content) and some adjustments involve environment or view adjustments (e.g., adjusting the dynamic range or other brightness characteristics used to provide the XR environment and/or view). Adjustments may vary over time, e.g., changing whether or not mitigations are provided and/or how such mitigations are provided based on the current virtual content item content (e.g., the current frame or scene of a movie being presented as the virtual content item) and/or the current environment, e.g., the current brightness levels of the view of the XR environment. Some implementations account for the particular hardware components responsible for optical artifacts, for example, based on modeling the optical components and light traveling from the display through the optical components and to a viewpoint/eye position.

Some implementations account for a user's expected or actual perceptual state (e.g., eye adapted to light or dark conditions, pupil dilation amount, etc.) in determining whether and/or how to provide optical artifact mitigation. For example, optical artifacts involving bright reflections may be more noticeable when a user is dark adapted. A device may recognize that an upcoming frame or scene is likely to produce such an optical artifact and, in advance of the frame or scene, alter the brightness characteristics of the view to gradually change the user's perceptual state to be less dark adapted and thus making the eventual optical artifact's appearance less noticeable.

In some implementations, optical artifact adjustments involve hardware and/or software mitigation techniques. Hardware techniques may change an optical module's characteristics (e.g., adjusting the layers of an optical stack) to mitigate the appearance of an optical artifact. Software adjustments may adjust the appearance of the view and/or content item within the view (as illustrated in Figures 3-8).

### Content Aware Mitigations and Enhancements

Mitigation techniques may be based at least in part on an understanding of content (e.g., a content item and/or environment). Mitigation techniques may be static (e.g., consistent over the course of a scene or content item's display) or dynamic (e.g., changing over time, for example, based on user/gaze changes).

In some implementations, a mitigation may involve changing a dynamic range and/or raising a black point used to display a view in order to mask one or more optical artifacts that may occur, for example, during a particular scene of a movie. Similarly, the brightness (e.g., the upper value of a dynamic range (e.g., SDR bright value) may be reduced to limit optical artifacts resulting from bright light causing glare. In some implementations, a dynamic range is adjusted in a linear way to mitigate for optical artifacts. In some implementations, a dynamic range is adjusted in a non-linear way to account for optical artifacts. In some implementations, a change applies to an entire view (e.g., entire FOV of an HMD) while in other implementations, a change applies to only a certain region (e.g., at or around a region at which an optical artifact is predicted to occur).

Some implementations involve dynamic range adjustments. The dynamic range used to display content may be compressed to achieve one or more benefits. For example, dynamic range compression may be performed based on determining an absolute brightness of content, an environment, or a view, to provide a better viewing experience.

Some implementations, as illustrated in Figures 3-4, provide light-spill-based mitigations to reduce the appearance or noticeability of optical artifacts. This may involve adjusting the attributes (e.g., glow) of a light-spill effect based on optical artifact characteristics. For example, given an expected bright optical artifact, the glow of a light-spill effect can be enlarged to cover more of a user's field of view and/or to better reduce contrast globally. In contrast, when the virtual content item is dark, no adjustments to light-spill, contrast, etc. may be needed.

Information about the contents of a virtual content item can be used in various ways to predict artifacts and/or determine mitigations. Depending upon the content, an artifact may be predicted to have a certain level of structure, or to have more or less structure than a threshold, e.g., as being defined or diffuse. More structure may require more mitigation. Thus, in some implementations, content mitigations are determined based on the brightness and/or structure of content and/or associated optical artifacts. Some implementations compute algorithmically how much mitigation (e.g., light-spill) is needed based on assessing the content of the content item. If a scene of a content item is determined to be unlikely to be affected by optical artifacts, there may be no need to utilize system resources or otherwise change a viewing experience, i.e., no need to address unnoticeable phenomena.

Some implementations determine optical artifact characteristics and/or corresponding mitigations based on a combination of: (a) content the user is looking at (e.g., a particular content item); (b) what is in the user's peripheral vision (e.g., the environment surrounding the content item; and/or (c) optical module behavior/understanding. In some implementations, a mitigation, such as a light-spill effect, is strategically positioned to account for the position of an optical artifact. For example, light-spill may be applied to only the ground, only the ceiling, only a side wall, etc. of an environment.

Some implementations mitigate the appearance of optical artifacts using pass-through tinting. For example, an average color, strongest color, primary color, average color of the brightest half of the content, etc. of an optical artifact may be determined and used to apply a tint that will obscure or otherwise render an optical artifact less noticeable.

Based on content analysis, environment analysis, and/or modeling of the optical module, one or more changes to a view (e.g., an image) may be applied. This may involve reducing the brightness or contrast of a content item or changing the brightness or contrast of a surrounding environment, e.g., content displayed within or outside of the user's field of view.

In some implementations, the mitigations are selected based on criteria that seek to preserve the intent of a content item creator. For example, this may involve prioritizing mitigations external to the content item (e.g., environmental changes) over mitigations that change the appearance of the content item itself. In some implementations, minimal changes to mitigate artifacts such as ghosts are applied and only applied when needed, e.g., when an artifact is determined to have a characteristic such as brightness or contrast different that exceeds a threshold.

In some circumstances, the deeper the blacks provided by a display, the more noticeable an optical artifact will be. Reducing the deepness of the blacks that are displayed may serve to make an optical artifact less noticeable. In some circumstances, the more dynamic range provide by a display, the more noticeable an optical artifact will be. Reducing the dynamic range of the display may serve to make an optical artifact less noticeable. Accordingly, some mitigations reduce black depth levels and/or reduce dynamic range to mitigate optical artifacts. Static mitigations may perform content aware adaptation of the black level and/or extended dynamic range (EDR) being used by a display over time.

In some implementations, artifact mitigation decisions are made based on metadata (e.g., of a content item or environment). Understanding from such metadata that a small area or item (e.g., a light saber) within a content item will potentially produce a bright and well-defined ghost, an appropriate mitigation may be determined, e.g., determining that reducing contrast in the periphery will be insufficient and therefore determining to reduce the brightness of the small area or item (e.g., of the light saber) within the content itself.

In some implementations, artifact mitigation is based on metadata associated with particular time segments (e.g., frames, scenes, etc.) of a content item. Brightness metadata for a scene, for example, may provide average brightness values across all of the frames of the scene. Statistical information regarding frame or scene brightness in a movie's metadata and/or derived during playback may be used to make adaptations. Such information may include, as examples, peak brightness, average brightness, a histogram of brightness value presence, etc. A histogram may provide, for example, for every brightness level / brightness level range, the number of pixels that are that bright (i.e., having a brightness within the associated level range), providing a distribution of a signal with respect to how many pixels fall into certain nit ranges. Information stored within or otherwise associated with a content item may provide information about the content item creator's intent with respect to how bright the content item should be when it is experienced. In some implementations, information about a content item identifies brightness information for individual spatial portions (e.g., tiles, patches, segments, grid regions, etc.) of the content item. Such metadata may specify, for example, brightness information for each pixel of a frame/scene that is the average of brightness information for nearby pixels, e.g., the average brightness of all pixels within a threshold distance, the average brightness of the 9 closest pixels, or the average brightness in an associated, surrounding rectangular region of 16 pixels, etc.

A histogram of brightness information may be obtained based on pre-existing metadata and/or generated metadata, e.g., metadata generated using an analysis process such as a video decoder. Thus, a histogram or other brightness information about a content item or environment may be predetermined or determined in real-time during playback, streaming, or other live processing involved in the presentation of a view of an XR environment.

In some implementations, a device's display is configured to use a brightness range (e.g., a dynamic range) and that range is adjusted over time based on optical artifact characteristics or related considerations. A view of an XR environment may be displayed / mapped into an appropriate range at a given point in time. Accordingly, based on optical artifact characteristics and/or related considerations, the contents of a given view may be mapped into an appropriate range for display, e.g., to hide an artifact while still providing an adequate dynamic range for the user to have a desirable experience of the view.

In some implementations, a view depicts a content item (e.g., a movie) within an XR environment. The mitigation of optical artifacts in such a circumstance may be based in part on the relative size of the content item within the view of the XR environment. For example, a mitigation may be applied to change the appearance of the environment when the content item occupies a small portion of the view (e.g., less than a threshold percentage of the view or less than a threshold percentage of the user's field of view). Conversely, a mitigation may be applied to additionally (or alternatively) change the appearance of the content item itself where the content item occupies more than a certain portion of the view (e.g., more than a threshold percentage of the view or more than a threshold percentage of the user's field of view).

In some implementations, a process utilizes inputs regarding (a) a content item (e.g., regarding brightness and artist intent), (b) a surrounding environment (e.g., regarding brightness, area, complexity, contrast, scene understanding, etc.), and/or (c) an optical module to produce output that specifies mitigations or adjustments, e.g., dropping highlighting, adding a light-spill, selecting a particular dynamic range, etc. In some implementations, these inputs are used to determine a relative brightness of an optical artifact relative to a background portion of a view around the artifact, e.g., determining that the artifact will be 3 times brighter than the background. Based on the optical artifact exceeding a threshold (e.g., at least 2 times brighter than the background, at least 1.2 times brighter than the background, etc.), the process may determine whether to apply a mitigation and the characteristics of that mitigation. In some implementations, a peak brightness of a scene of a content item is used to predict an expected brightness of an optical artifact. In some cases, a dynamic range of a display is adjusted to reduce the expected relative brightness between an optical artifact and a background, e.g., using only 50%, 80%, etc. of the dynamic range to reduce the relative brightness of an optical artifact to be less than 2 times the average brightness of the background.

Some implementations provide different viewing modes that include a first mode in which no (or relatively less) optical artifact mitigations are applied and a second mode in which at least some (or relatively more) optical artifact mitigations are applied. In some implementations, the mitigation mode used by a device is determined automatically (e.g., based on determining a type of use of the device such as productivity, entertainment, meditation, etc.). In some implementations, the mitigation mode used by the device is selected manually by the user.

### Gaze-Based Mitigations and Enhancements

A dynamic mitigation technique may use dynamic information such as user gaze data to determine if and how to apply mitigations or to otherwise enhance a view to provide a better user experience. Some artifacts may result from parts of a view at which a user is not looking. By correlating where the user is looking and reducing the amount of light in select areas based on where the user is looking, optical artifact noticeability may be reduced, for example, by reducing the total amount of light provided. In some implementations, a dynamic mitigation may involve gaze-based dimming of peripheral portions of a view to mitigate optical artifacts. This may involve adjusting content displayed in a user's periphery in a way that makes optical artifacts less noticeable. Bright portions of a view or bright portions of a content item displayed within a view may be identified and selective dimming applied to make potential optical artifacts associated with such bright portions less noticeable. Some implementations determine whether a user is looking at a relatively bright region and modify display characteristics (e.g., dynamic range, peak brightness, HDR on or off, theater on or off, etc.) of peripheral regions accordingly.

In some implementations, a gaze-based dimming curve is adjusted to fit the content. This may involve more aggressively dimming a periphery when the content in the periphery is generally already dark. For example, in a cinema mode, a surrounding environment may be relatively dark and thus dimmed more than a circumstance such as an XR pass-through showing a bright room environment in which dimming is more likely to be objectionable or noticeable.

In some implementations, local contrast is additionally or alternatively suppressed in the periphery. This may involve, for example, a two-stage process. A first stage may involve using a nonlinear curve defining an alpha multiplier to reduce brightness of pixel, where falloff is based on distance from fovea (e.g., alpha to multiply against pixel(x,y) = f (distance from gaze location). A second stage may involve, based on brightness value of each pixel, adjusting the alpha multiplier to flatten contrast in the periphery, e.g., based on HDR range contributing most to ghosting, increasing the alpha multiplier. Doing so may preserve local contrast in the fovea region while flattening contrast in the periphery.

Some implementations further involve utilizing smoothing transitions between dimming curves and/or contrast changes. Such transitions may be appropriate, for example, when content changes significantly or between scenes.

Optical ghosts, glare, and other artifacts may result from a user's gaze or other eye behavior, e.g., based on a user's gaze moving around. Moreover, eye tracking inaccuracy may make mitigations (e.g., selective dimming, contrast changes, etc.) more noticeable or otherwise distracting to a user.

Temporal filtering may be used to reduce artifact noticeability. A temporal algorithm may be used in applying mitigations in order to compensate for inaccuracies in tracking eye behavior, e.g., rapid eye movement (REM) or blinking. During REM or blinking, there may be latency between where the gaze is and where the gaze-tracking system has determined the gaze to be. To compensate for those scenarios, a temporal system may smooth artifact mitigations so that when a user's eye experiences REM or blinking, the user does not notice a portion of their view becoming dim/bright, etc.

Some implementations account for user differences, e.g., user individualization. Users have different brightness perception, so predictions of necessary or desirable amounts of dimming for average users may be inapplicable to some users. User-individualized dimming may be determined based on recognizing individual characteristics of a given user. For example, users may be categorized based on whether they are nearsighted and thus potentially more sensitive to peripheral dimming. As another example, users may be categorized based on detecting eye convergence difficulties and thus potentially more sensitive to peripheral dimming. User categories or other user-specific attributes may be used to identify and/or configure appropriate mitigations and enhancements.

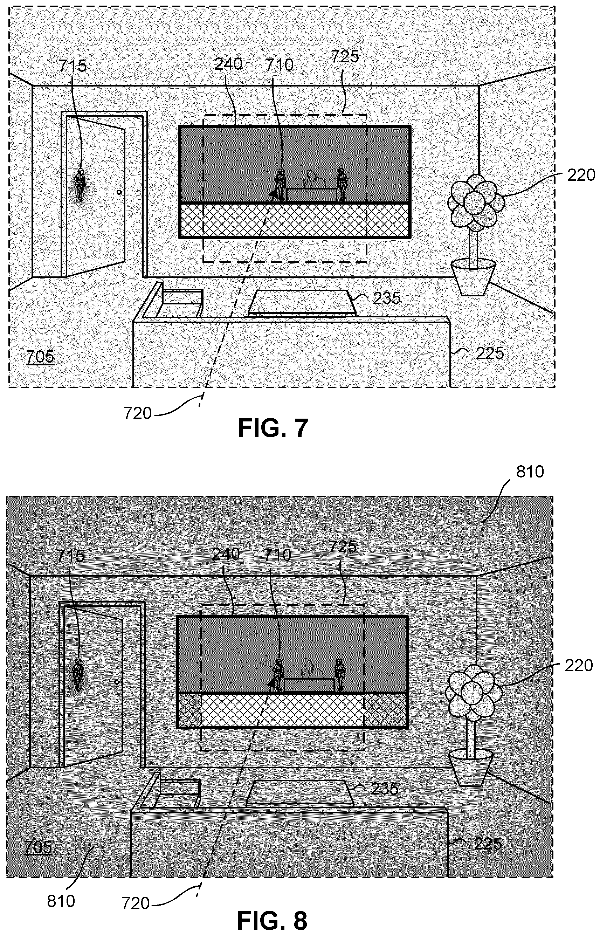

**Figure 7** illustrates a view 705 of the XR environment of Figure 2, while **Figure 8** illustrates a view 805 that includes an enhancement to the view 705 of Figure 7. In Figure 7, the user is looking in gaze direction 720 at content object 710 and has foveal gaze zone (FGZ) 725. Portions of the view 705 outside of the FGZ 725 are in the user's periphery and thus may be perceived with less acuity than portions of the view 705 that are within the FGZ 725.

In Figure 8, an enhancement is applied to alter the appearance of the portions of the view 705 outside of the FGZ 725 that are in the user's periphery. The appearance of such portions may, for example, be dimmed. In another example the appearance of such portions may have altered contrast, e.g., being modified by a contrast flattening technique. Such dimming and/or contrast changes can enhance the experience of the user viewing view 805. For example, such dimming and/or contrast change may reduce the appearance of an optical artifact, such as optical artifact 715. Contrast flattening may reduce the occurrence or severity of adjacent view portions having significantly different brightness values. Significant brightness values may draw the user's attention aware from the gaze/FGZ to the periphery. By reducing the occurrence of significant contrast differences in the periphery, the user may have a better experience viewing the content, e.g., being better able to focus on portions of the content that are of interest without being distracted by artifacts or other peripheral anomalies.

### Optical Module-Based Artifacts and Associated Mitigations and Enhancements

Some implementations account for optical module characteristics in optical artifact mitigation. This may involve modeling the optical module and predicting, e.g., based on ray tracing, 3D modeling, etc., where optical artifacts are expected given the current content, display panel position relative to the optical module, and/or user eye position relative to the optical module. For example, an optical module may include a panel that has a polarizer on it. Polarized light may be emitted through the display panel and pass-through a half mirror such that 50% is removed and 50% goes through the half mirror and passes through a quarter wave plate to an advanced polarizing film (APF). In an ideal scenario, the light bounced off of the polarizing film, travels back through the optical stack, and bounces off the half-mirror to the user's eye. In this example of a catadioptric lens (e.g., pancake/folded-plate lens), the light takes a folded path through the optical stack to enable significant optical lensing effects in a very small form factor. However, such an optical module configuration may result in optical artifacts, e.g., ghosts. Ghosts may be present because optical films are imperfect and any time the light does not follow the intended paths, it may leak somewhere else and cause artifacts such as ghosting. A direct ghost may be the result of light passing through and not bouncing off of an APF layer properly, e.g., going straight through. An indirect ghost may be the result of light taking an extra circuit through the lens, e.g., bounding off an APF again.

**Figure 9** illustrates a lens double bounce ghost artifact on an exemplary model 900 of an optical module of an electrical device. In this example, the model 900 of the optical module includes 3D positions of multiple layers 912, 914, 916 of the optical module as well as 3D positions of a display 918 and an eye/viewpoint 910. The model may further model specific content on the display 918, e.g., by dividing the model of the display into a plurality of rectangular subregions having different content (e.g., being bright or dark) corresponding to actual content to be displayed on the display.

The model 900 may be used to model or simulate light paths (both intended and unintended). For example, an intended light path 920 may be modeled to travel from the modeled display 918 through layers 916 and 914, bounce back through layers 914 and 916, and then bounce out to reach modeled eye/viewpoint 910. Similarly, an unintended light path 930 may be modeled to travel from modeled display 918 through layers 916 and 914, bounce back through layers 914 and 916, bounce back through layers, 916 and 914, bounce back again through layers 914 and 916, and then bounce out to reach modeled eye-viewpoint 910. Figure 9 provides an example of modeling a lens double bounce ghosting artifact, which may have an appearance 1110 (as illustrated in Figure 11).

The modeling may produce predictions of artifact locations based on predicting unintended light paths (e.g., light path 930 and others like it). Such predictions may be combined and represented as an image and/or providing 2D coordinate information relative to a 2D pixel grid associated with a view of an XR environment that identifies the locations within the view of one or more artifacts.

**Figure 10** illustrates modeling various optical artifacts based on optical module modeling of light paths. In these examples, the intended light paths would ideally (e.g., absent imperfections in optical module components) produce an object 1000 surrounded by an entirely black environment. In a first example, the modeling reveals an optical artifact 1010 that is distributed evenly around object 1000. In a second example, the modeling reveals an optical artifact 1020 that is on the right side only of the object 1000. In the third example, the modeling reveals an optical artifact 1030 that is on the left side only of the object 1000.

The appearance of artifacts may be modeled in ways that account for the characteristics of the optical module (e.g., the locations and characteristics of different layers, films, etc.), the content being displayed (e.g., content item color/intensity, environment color/intensity, relative characteristics between a content item and an environment, etc.), and/or user information (e.g., user pupil position, user gaze direction, user FGZ, etc.).

### Examples of Ghosting Artifacts

Ghosting artifacts can have various forms. Ghosting artifacts can include static local ghosts, for example, resulting in circumstances in which a content item has one or more small regions of content that triggers local ghosts. Mitigations in such circumstances may include, but are not limited to including, using light-spill to hide or reduce the noticeability of such ghosts and/or using dynamic local dimming. Maintaining a consistent dimming (e.g., across pass-through environments) may additionally, or alternatively, mitigate for such ghosting.

Ghosting artifacts can include static global ghosts, for example, resulting in circumstances in which any content item when viewed on a significantly darker environment produces a general haze. Mitigations in such circumstances may include, but are not limited to including, using light-spill and/or changing brightness conditions. In dim environments, certain content conditions can appear very bright and certain environment transition conditions may enhance the prominence of artifacts. Such issues may be addressed, for example, increasing dimming and/or applying intelligent transition strategies avoid changes that enhance artifact prominence.

Ghosting may include dynamic local ghosts, for example, in circumstances in which small regions of bright moving content creates ghost movements across a field of view (FOV). Similarly, ghosting may include dynamic global ghosts in which large moving regions can create moving ghosts for certain content conditions.

### Example Methods

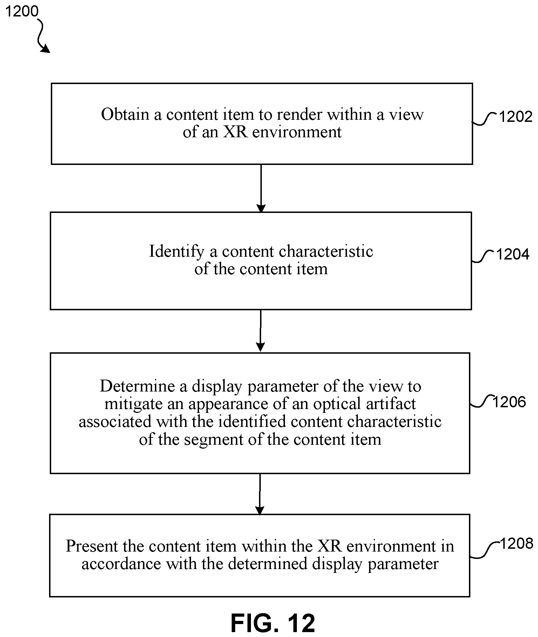

**Figure 12** is a flowchart illustrating an exemplary method of mitigating an optical artifact. In some implementations, the method 1200 is performed by a device, such as a mobile device, desktop, laptop, HMD, or server device. In some implementations, the device has a screen for displaying images and/or a screen for viewing stereoscopic images such as a head-mounted display (HMD such as e.g., device 105 of Figure 1). In some implementations, the method 1200 is performed by processing logic, including hardware, firmware, software, or a combination thereof. In some implementations, the method 1200 is performed by a processor executing code stored in a non-transitory computer-readable medium (e.g., a memory). Each of the blocks in the method 1200 may be enabled and executed in any order.

At block 1202, the method 1200 involves obtaining a content item to render within a view of an extended reality (XR) environment. As examples, this may involve obtaining a movie, TV show, app, etc. which may be rendered in an immersive view or within a virtual or real environment.

At block 1204, the method 1200 involves identifying a visual characteristic (e.g., type of content, type of scene, peak brightness, minimum brightness, etc.) of the content item. The visual characteristic in some examples includes or is based upon a peak brightness of a segment and/or a minimum brightness of the segment, for example, where those characteristics for the segment correspond to average values for the frames within the segment. The visual characteristic may depend on a current viewpoint used to provide the view. The content item may comprise time-ordered media frames and determining the visual characteristic comprises evaluating the content item on a frame-by-frame or scene-by-scene basis.

The visual characteristic in some examples includes or is based upon a histogram corresponding to brightness of multiple portions (e.g., pixels) of a frame of the segment, or a type of the content item. The visual characteristic in some examples includes or is based upon on metadata stored in the content item or metadata stored separately from the content item and associated with the content item. The characteristic may be determined based on content and/or environment metadata that is specific to one or more frames or scenes. The visual characteristic may comprise or be based upon a histogram or spatial analysis of content brightness. The visual characteristic may identify one or more locations within a content item e.g., x/y positions, at which particular brightness features occur.

At block 1206, the method 1200 involves determining a display parameter of the view to mitigate an appearance of an optical artifact associated with the identified visual characteristic of the segment of the content item. Determining the display parameter may comprise determining a brightness for at least a portion of a content item during the segment. Determining the display parameter may comprise determining a brightness for at least a portion of the XR environment separate from the content item during the segment. Determining the display parameter may comprise determining a mapping of the content item to a dynamic range used to display the view. Determining the display parameter may comprises determining a change in the contrast used in the view during the segment, determining a change to a black level used in the view during the segment, and/or determining a change to a color of at least a portion of the content during the segment. Determining the display parameter may comprise determining a change to tinting of the view during the segment. Determining the display parameter may comprise determining a light-spill affect to apply in the view during the segment.

Determining the display parameter may involve a combination of one or more of adjusting brightness (e.g., to drop the brightness of a highlight or hide a reflection by reducing brightness in area of the reflection), dynamic range (e.g., fitting/mapping to a particular range), black level, contrast, color, tinting, etc. of the content item and/or the environment around the content item (e.g., light-spill, tinting, etc.), and/or any other type of display adjustment.

Determining the display parameter may involve determining one or more frame-to-frame adjustments, which may be smoothed or timed to occur on scene changes to avoid noticeable changes.

At block 1208, the method 1200 involves presenting, via the display, the view with the content item within the XR environment in accordance with the determined display parameter. Such presentation may mitigate the appearance of an optical artifact that that may otherwise be more noticeable and/or provide an otherwise enhanced view. In some implementations, the method 1200 is configured to address an optical artifact that is a result of light leakage in a catadioptric lens of an optical module of the display. In some implementations, the optical artifact that is addressed is at least partially the result of a clip-on lens. In some implementations, the optical artifact is dichoptic comprising a different optical artifact for each eye, and a respective different display parameter for each eye is determined to mitigate appearance of a different optical artifact for each eye. In some implementations, a subset of a field of view associated with a view is identified, for example, based on one or both of objectionableness/visual sensitivity and lens characteristics (e.g., lens design/optical path/polarization details, etc.) and a mitigation is selectively applied to only the subset of the field of view. Objectionableness/visual sensitivity may correspond to a measure of how objectionable an artifact may be to a particular user or to users generally. In one example, the system may analyze different portions (e.g., top, bottom, etc.) of a display/view and/or mitigate in a particular portion (e.g., only in the bottom portion) of the display/view based on a determination that people generally seem to find artifacts more objectionable when artifacts appear in that portion of the display/view.

In some implementations, the method 1200 further involves identifying an environment characteristic of the XR environment. The display parameter of the view may additionally, or alternatively, be determined based on the environment characteristic. The environment characteristic may be, as examples, a peak brightness, a minimum brightness, an average brightness of portions of the view separate from the content item, or a combination thereof.

In some implementations, the method 1200 further involves identifying an optical module characteristic based on 3D modeling of an optical module of the display. The display parameter of the view may additionally, or alternatively, be determined based on the optical module characteristic.

The method 1200 may present a content item within an XR environment in various ways. In some implementations, the content item occupies an entirety of the view and determining the display parameter comprises adjusting display of the content item. In some implementations, the content item is displayed at a 2D position within the XR environment, the view depicts portions of the XR environment around the content item based on a current 3D viewpoint within the XR environment, and determining the display parameter comprises adjusting display of the content item. In some implementations, the content item is displayed at a 2D position within the XR environment, the view depicts portions of the XR environment around the content item based on a current 3D viewpoint within the XR environment, and determining the display parameter comprises adjusting display of the portions of the XR environment around the content item.

In some implementations, the method 1200 involves determining different display parameters for the view during different segments of the content item based on different visual characteristics during the different segments. For example, during a first segment corresponding to a dark scene, standard display parameters may be used without mitigating adjustments and then later, during a second segment corresponding to a brighter scene, display parameters with optical artifact mitigation adjustments may be used.

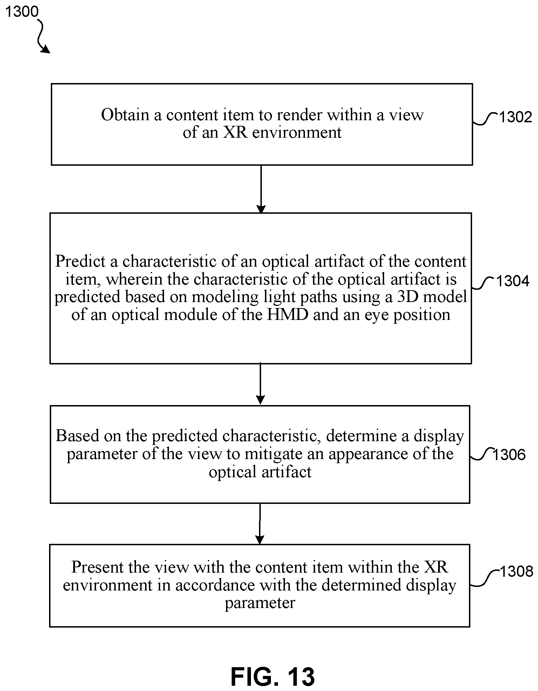

**Figure 13** is a flowchart illustrating another exemplary method of mitigating an optical artifact. In some implementations, the method 1300 is performed by a device, such as a mobile device, desktop, laptop, HMD, or server device. In some implementations, the device has a screen for displaying images and/or a screen for viewing stereoscopic images such as a head-mounted display (HMD such as e.g., device 105 of Figure 1). In some implementations, the method 1300 is performed by processing logic, including hardware, firmware, software, or a combination thereof. In some implementations, the method 1300 is performed by a processor executing code stored in a non-transitory computer-readable medium (e.g., a memory). Each of the blocks in the method 1300 may be enabled and executed in any order.

At block 1302, the method 1300 involves obtaining a content item to render within a view of an XR environment. As examples, this may involve obtaining a movie, TV show, app, etc. which may be rendered in an immersive view or within a virtual or real environment.

At block 1304, the method 1300 involves predicting a characteristic (e.g., noticeability, brightness, size, location, etc.) of an optical artifact of the content item. The characteristic of the optical artifact may be predicted, for example, based on modeling light paths using a 3D model of an optical module of the HMD and an eye position. The characteristic may correspond to one or more frames or one or more scenes, as examples.

At block 1306, the method 1300 involves, based on the predicted characteristic, determining a display parameter of the view to mitigate an appearance of the optical artifact. Determining the display parameter may comprise determining a brightness for at least a portion of a content item during the segment. Determining the display parameter may comprise determining a brightness for at least a portion of the XR environment separate from the content item during the segment. Determining the display parameter may comprise determining a mapping of the content item to a dynamic range used to display the view. Determining the display parameter may comprises determining a change in the contrast used in the view during the segment, determining a change to a black level used in the view during the segment, and/or determining a change to a color of at least a portion of the content during the segment. Determining the display parameter may comprise determining a change to tinting of the view during the segment. Determining the display parameter may comprise determining a light-spill affect to apply in the view during the segment.

Determining the display parameter may involve a combination of one or more of adjusting brightness (e.g., to drop the brightness of a highlight or hide a reflection by reducing brightness in area of the reflection), dynamic range (e.g., fitting/mapping to a particular range), black level, contrast, color, tinting, etc. of the content item and/or the environment around the content item (e.g., light-spill, tinting, etc.), and/or any other type of display adjustment.

Determining the display parameter may involve determining one or more frame-to-frame adjustments, which may be smoothed or timed to occur on scene changes to avoid noticeable changes.

At block 1308, the method 1200 involves presenting, via the display, the view with the content item within the XR environment in accordance with the determined display parameter. Such presentation may mitigate the appearance of an optical artifact that that may otherwise be more noticeable and/or provide an otherwise enhanced view. In some implementations, the method 1200 is configured to address an optical artifact that is a result of light leakage in a catadioptric lens of an optical module of the display. In some implementations, the optical artifact that is addressed is at least partially the result of a clip-on lens. In some implementations, the optical artifact is dichoptic comprising a different optical artifact for each eye, and a respective different display parameter for each eye is determined to mitigate appearance of a different optical artifact for each eye. In some implementations, a subset of a field of view associated with a view is identified, for example, based on one or both of objectionableness/visual sensitivity and lens characteristics (e.g., lens design/optical path/polarization details, etc.) and a mitigation is selectively applied to only the subset of the field of view. Objectionableness/visual sensitivity may correspond to a measure of how objectionable an artifact may be to a particular user or to users generally. In one example, the system may analyze different portions (e.g., top, bottom, etc.) of a display/view and/or mitigate in a particular portion (e.g., only in the bottom portion) of the display/view based on a determination that people generally seem to find artifacts more objectionable when artifacts appear in that portion of the display/view.

In some implementations, the method 1300 further involves identifying a content item characteristic and/or an environment characteristic XR. The display parameter of the view may additionally, or alternatively, be determined based on the visual characteristic and/or the environment characteristic.

The method 1300 may present a content item within an XR environment. In some implementations, the content item occupies an entirety of the view and determining the display parameter comprises adjusting display of the content item. In some implementations, the content item is displayed at a 2D position within the XR environment, the view depicts portions of the XR environment around the content item based on a current 3D viewpoint within the XR environment, and determining the display parameter comprises adjusting display of the content item. In some implementations, the content item is displayed at a 2D position within the XR environment, the view depicts portions of the XR environment around the content item based on a current 3D viewpoint within the XR environment, and determining the display parameter comprises adjusting display of the portions of the XR environment around the content item.

In some implementations, the method 1200 involves determining different display parameters for the view during different segments of the content item based on different visual characteristics during the different segments. For example, during a first segment corresponding to a dark scene, standard display parameters may be used without mitigating adjustments and then later, during a second segment corresponding to a brighter scene, display parameters with optical artifact mitigation adjustments may be used.

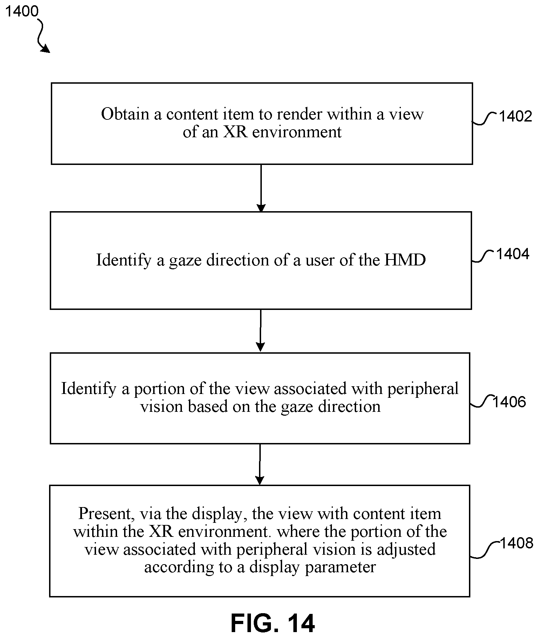

**Figure 14** is a flowchart illustrating an exemplary method of display enhancement. In some implementations, the method 1400 is performed by a device, such as a mobile device, desktop, laptop, HMD, or server device. In some implementations, the device has a screen for displaying images and/or a screen for viewing stereoscopic images such as a head-mounted display (HMD such as e.g., device 105 of Figure 1). In some implementations, the method 1400 is performed by processing logic, including hardware, firmware, software, or a combination thereof. In some implementations, the method 1400 is performed by a processor executing code stored in a non-transitory computer-readable medium (e.g., a memory). Each of the blocks in the method 1400 may be enabled and executed in any order.

At block 1402, the method 1400 involves obtaining a content item to render within a view of an XR environment. As examples, this may involve obtaining a movie, TV show, app, etc. which may be rendered in an immersive view or within a virtual or real environment.

At block 1404, the method 1400 involves identifying a gaze direction of a user of the HMD. For example, an HMD may have one or more eye tracking systems comprises emitters and/or sensors that capture sensor data used to determine eye pose (e.g., position and/or orientation relative to other components of the HMD). In one example, such a tracking system produces a plurality of IR glints (e.g., in one or more patterns) that are captured or otherwise detected in IR images and used to determine eye pose. Based on eye pose (or otherwise) a gaze direction of the user is determined. Gaze direction may be determined based on determining gaze directions of one or both eyes.

At block 1406, the method 1400 involves identifying a portion of the view associated with peripheral vision based on the gaze direction. The gaze direction may be used to identify which portion (e.g., which pixel or group of pixels to which a user's gaze is directed). Identifying the portion of the view associated with peripheral vision may be based on determining a foveal gaze zone (FGZ) based on the gaze direction and identifying one or more portions of the view outside of the FGZ.

At block 1408, the method 1400 involves presenting, via the display, the view with content item within the XR environment. wherein the portion of the view associated with peripheral vision is adjusted according to a display parameter. In some implementations, the display parameter specifies flattening contrast within the portion of the view associated with peripheral vision. Flattening contrast within the portion of the view associated with peripheral vision may comprise suppressing local contrast within the portion of the view associated with peripheral vision. In some implementations, the display parameter additionally, or alternatively, specifies reducing brightness of the portion of the view associated with peripheral vision.

The portion of the view associated with peripheral vision may be adjusted using a nonlinear curve defining an alpha multiplier to reduce pixel brightness of pixel based on distance from a foveal region of the view. The portion of the view associated with peripheral vision may be adjusted using an alpha multiplier to flatten contrast. The portion of the view associated with peripheral vision may be adjusted using both: (a) a nonlinear curve defining a first multiplier to reduce pixel brightness of pixel based on distance from a foveal region of the view; and using a second multiplier to flatten contrast.

Some implementations adjust the view over time to provide a smooth transition between gaze-based dimming curves that are adjusted over time to change an amount of dimming applied to the portion of the view associated with peripheral vision. Some implementations adjust the view over time to account for detect blink or saccade user activity.

Some implementations are tailored based on user-specific characteristics. For example, the method 1400 may involve adjusting an amount of contrast flattening based on a user-specific characteristic. In one example, the user-specific characteristic is near-sightedness. In another example, the user-specific characteristic is eye-convergence inaccuracy.

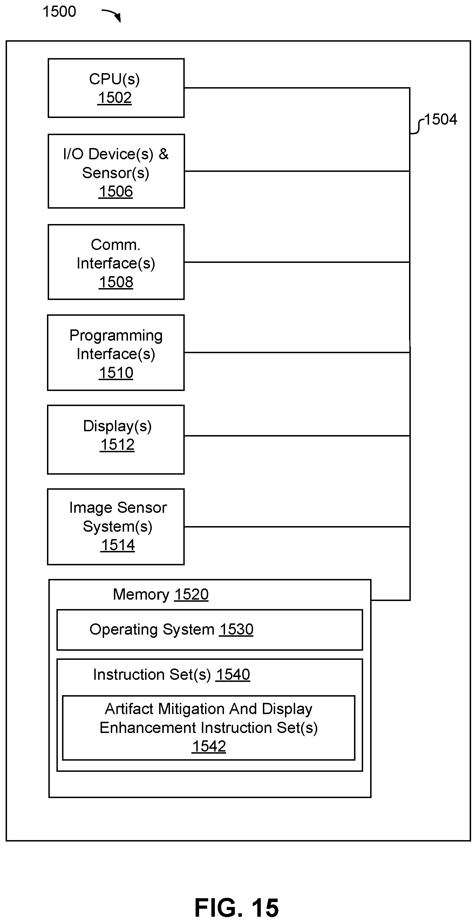

**Figure 15** is a block diagram of an example device 1500. Device 1500 illustrates an exemplary device configuration for electronic devices 105 and 110 of Figure 1. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 1500 includes one or more processing units 1502 (e.g., microprocessors, ASICs, FPGAs, GPUs, CPUs, processing cores, and/or the like), one or more input/output (I/O) devices and sensors 1504, one or more communication interfaces 1508 (e.g., USB, FIREWIRE, THUNDERBOLT, IEEE 802.3x, IEEE 802.1 lx, IEEE 802.14x, GSM, CDMA, TDMA, GPS, IR, BLUETOOTH, ZIGBEE, SPI, I2C, and/or the like type interface), one or more programming (e.g., I/O) interfaces 1510, output devices (e.g., one or more displays) 1512, one or more interior and/or exterior facing image sensor systems 1514, a memory 1520, and one or more communication buses 1504 for interconnecting these and various other components.

In some implementations, the one or more communication buses 1504 include circuitry that interconnects and controls communications between system components. In some implementations, the one or more I/O devices and sensors 1506 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), one or more cameras (e.g., inward facing cameras and outward facing cameras of an HMD), one or more infrared sensors, one or more heat map sensors, and/or the like.

In some implementations, the one or more displays 1512 are configured to present a view of a physical environment, a graphical environment, an extended reality environment, etc. to the user. In some implementations, the one or more displays 1512 are configured to present content (determined based on a determined user/object location of the user within the physical environment) to the user. In some implementations, the one or more displays 1512 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays 1512 correspond to diffractive, reflective, polarized, holographic, etc. waveguide displays. In one example, the device 1500 includes a single display. In another example, the device 1500 includes a display for each eye of the user.

In some implementations, the one or more image sensor systems 1514 are configured to obtain image data that corresponds to at least a portion of the physical environment 100. For example, the one or more image sensor systems 1514 include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 1514 further include illumination sources that emit light, such as a flash. In various implementations, the one or more image sensor systems 1514 further include an on-camera image signal processor (ISP) configured to execute a plurality of processing operations on the image data.

In some implementations, sensor data may be obtained by device(s) (e.g., devices 105 and 110 of Figure 1) during a scan of a room of a physical environment. The sensor data may include a 3D point cloud and a sequence of 2D images corresponding to captured views of the room during the scan of the room. In some implementations, the sensor data includes image data (e.g., from an RGB camera), depth data (e.g., a depth image from a depth camera), ambient light sensor data (e.g., from an ambient light sensor), and/or motion data from one or more motion sensors (e.g., accelerometers, gyroscopes, IMU, etc.). In some implementations, the sensor data includes visual inertial odometry (VIO) data determined based on image data. The 3D point cloud may provide semantic information about one or more elements of the room. The 3D point cloud may provide information about the positions and appearance of surface portions within the physical environment. In some implementations, the 3D point cloud is obtained over time, e.g., during a scan of the room, and the 3D point cloud may be updated, and updated versions of the 3D point cloud obtained over time. For example, a 3D representation may be obtained (and analyzed/processed) as it is updated/adjusted over time (e.g., as the user scans a room).

In some implementations, sensor data may be positioning information, some implementations include a VIO to determine equivalent odometry information using sequential camera images (e.g., light intensity image data) and motion data (e.g., acquired from the IMU/motion sensor) to estimate the distance traveled. Alternatively, some implementations of the present disclosure may include a simultaneous localization and mapping (SLAM) system (e.g., position sensors). The SLAM system may include a multidimensional (e.g., 3D) laser scanning and range-measuring system that is GPS independent and that provides real-time simultaneous location and mapping. The SLAM system may generate and manage data for a very accurate point cloud that results from reflections of laser scanning from objects in an environment. Movements of any of the points in the point cloud are accurately tracked over time, so that the SLAM system can maintain precise understanding of its location and orientation as it travels through an environment, using the points in the point cloud as reference points for the location.

In some implementations, the device 1500 includes an eye tracking system for detecting eye position and eye movements (e.g., eye gaze detection). For example, an eye tracking system may include one or more infrared (IR) light-emitting diodes (LEDs), an eye tracking camera (e.g., near-IR (NIR) camera), and an illumination source (e.g., an NIR light source) that emits light (e.g., NIR light) towards the eyes of the user. Moreover, the illumination source of the device 1500 may emit NIR light to illuminate the eyes of the user and the NIR camera may capture images of the eyes of the user. In some implementations, images captured by the eye tracking system may be analyzed to detect position and movements of the eyes of the user, or to detect other information about the eyes such as pupil dilation or pupil diameter. Moreover, the point of gaze estimated from the eye tracking images may enable gaze-based interaction with content shown on the near-eye display of the device 1500.

The memory 1520 includes high-speed random-access memory, such as DRAM, SRAM, DDR RAM, or other random-access solid-state memory devices. In some implementations, the memory 1520 includes non-volatile memory, such as one or more magnetic disk storage devices, optical disk storage devices, flash memory devices, or other non-volatile solid-state storage devices. The memory 1520 optionally includes one or more storage devices remotely located from the one or more processing units 1502. The memory 1520 includes a non-transitory computer readable storage medium.

In some implementations, the memory 1520 or the non-transitory computer readable storage medium of the memory 1520 stores an optional operating system 1530 and one or more instruction set(s) 1540. The operating system 1530 includes procedures for handling various basic system services and for performing hardware dependent tasks. In some implementations, the instruction set(s) 1540 include executable software defined by binary information stored in the form of electrical charge. In some implementations, the instruction set(s) 1540 are software that is executable by the one or more processing units 1502 to carry out one or more of the techniques described herein.

The instruction set(s) 1540 includes a video content presentation instruction set 1542. The instruction set(s) 1540 may be embodied as a single software executable or multiple software executables. The artifact mitigation and display enhancement instruction set 1542 is configured with instructions executable by a processor to analyze content and environment characteristics, perform optical module modeling, and/or otherwise determine mitigations and enhancements based various considerations, as described herein.

Although the instruction set(s) 1540 are shown as residing on a single device, it should be understood that in other implementations, any combination of the elements may be located in separate computing devices. Moreover, Figure 15 is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

Those of ordinary skill in the art will appreciate that well-known systems, methods, components, devices, and circuits have not been described in exhaustive detail so as not to obscure more pertinent aspects of the example implementations described herein. Moreover, other effective aspects and/or variants do not include all of the specific details described herein. Thus, several details are described in order to provide a thorough understanding of the example aspects as shown in the drawings. Moreover, the drawings merely show some example embodiments of the present disclosure and are therefore not to be considered limiting.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, e.g., one or more modules of computer program instructions, encoded on computer storage medium for execution by, or to control the operation of, data processing apparatus. Alternatively, or additionally, the program instructions can be encoded on an artificially generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures. Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel. The operations described in this specification can be implemented as operations performed by a data processing apparatus on data stored on one or more computer-readable storage devices or received from other sources.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Exemplary embodiments of the present disclosure are set out in the following items and clauses:

### Items

1. A method comprising:
   at a head mounted device (HMD) having a processor and a display:
   obtaining a content item to render within a view of an extended reality (XR) environment;
   identifying a visual characteristic of the content item;
   determining a display parameter of the view to mitigate an appearance of an optical artifact associated with the identified visual characteristic; and
   presenting, via the display, the view with the content item within the XR environment in accordance with the determined display parameter.
2. The method of item 1, wherein the visual characteristic is:
   a peak brightness of the segment; or
   a minimum brightness of the segment.
3. The method of any of items 1-2, wherein the visual characteristic is:
   a histogram corresponding to brightness of multiple portions of a frame of the segment, or a type of the content item.
4. The method of any of items 1-3, wherein the visual characteristic is determined based on metadata stored in the content item or metadata stored separately from the content item and associated with the content item.
5. The method of any of items 1-4, wherein the visual characteristic depends on a current viewpoint used to provide the view.
6. The method of any of items 1-5, wherein the content item comprises time-ordered media frames and determining the visual characteristic comprises evaluating the content item on a frame-by-frame or scene-by-scene basis.
7. The method of any of items 1-6, wherein determining the display parameter comprises:
   determining a brightness for at least a portion of a content item during the segment.
8. The method of any of items 1-7, wherein determining the display parameter comprises:
   determining a brightness for at least a portion of the XR environment separate from the content item during the segment.
9. The method of any of items 1-8, wherein determining the display parameter comprises:
   determining a mapping of the content item to a dynamic range used to display the view.
10. The method of any of items 1-9, wherein determining the display parameter comprises:
   determining a change to contrast used in the view during the segment;
   determining a change to a black level used in the view during the segment;
   determining a change to a color of at least a portion of the content during the segment; or
   determining a change to tinting of the view during the segment.
11. The method of any of items 1-10, wherein determining the display parameter comprises:
   determining a light-spill affect to apply in the view during the segment.
12. The method of any of items 1-11, further comprising:
   identifying an environment characteristic of the XR environment,
   wherein the display parameter of the view is determined based on the environment characteristic, wherein the environment characteristic is a peak brightness, a minimum brightness, or an average brightness of portions of the view separate from the content item.
13. The method of any of items 1-12, wherein optical artifact is a result of light leakage in a catadioptric lens of an optical module of the display.
14. The method of item 13, wherein the optical artifact is at least partially a result of a clip-on lens.
15. The method of any of items 1-14, wherein the optical artifact is dichoptic comprising a different optical artifact for each eye, and a respective different display parameter for each eye is determined to mitigate appearance of a different optical artifact for each eye.
16. The method of any of items 1-15 further comprising:
   selecting a subset of a field of view associated with the view, the subset selected based on objectionableness and lens characteristics; and
   mitigating only the subset of the field of view.
17. The method of any of items 1-16, further comprising:
   identifying a gaze direction; and
   identifying a portion of the view associated with peripheral vision based on the gaze direction; and
   wherein the display parameter of the view is determined based on the portion of the view associated with peripheral vision, wherein the display parameter reducing brightness of the portion of the view associated with peripheral vision.
18. The method of any of items 1-17, further comprising:
   identifying a gaze direction; and
   identifying a portion of the view associated with peripheral vision based on the gaze direction; and
   wherein the display parameter of the view is determined based on the portion of the view associated with peripheral vision, wherein the display parameter performs contrast flattening on the portion of the view associated with peripheral vision.
19. A system comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the one or more processors to perform operations comprising:
   obtaining a content item to render within a view of an extended reality (XR) environment;
   identifying a visual characteristic of the content item;
   determining a display parameter of the view to mitigate an appearance of an optical artifact associated with the identified visual characteristic; and
      presenting, via the display, the view with the content item within the XR environment in accordance with the determined display parameter.
20. A non-transitory computer-readable storage medium storing program instructions executable via one or more processors to perform operations comprising:
   obtaining a content item to render within a view of an extended reality (XR) environment;
   identifying a visual characteristic of the content item;
   determining a display parameter of the view to mitigate an appearance of an optical artifact associated with the identified visual characteristic; and
   presenting, via the display, the view with the content item within the XR environment in accordance with the determined display parameter.

### Clauses

1. A method comprising:
   at a head mounted device (HMD) having a processor and a display:
   obtaining a content item to render within a view of an extended reality (XR) environment;
   identifying a visual characteristic of the content item;
   determining a display parameter of the view to mitigate an appearance of an optical artifact associated with the identified visual characteristic; and
   presenting, via the display, the view with the content item within the XR environment in accordance with the determined display parameter.
2. The method of clause 1, wherein the visual characteristic is:
   a peak brightness of the segment; or
   a minimum brightness of the segment.
3. The method of clause 1, wherein the visual characteristic is:
   a histogram corresponding to brightness of multiple portions of a frame of the segment, or a type of the content item.
4. The method of clause 1, wherein the visual characteristic is determined based on metadata stored in the content item or metadata stored separately from the content item and associated with the content item.
5. The method of any of clauses 1-4, wherein the visual characteristic depends on a current viewpoint used to provide the view.
6. The method of any of clauses 1-5, wherein the content item comprises time-ordered media frames and determining the visual characteristic comprises evaluating the content item on a frame-by-frame or scene-by-scene basis.
7. The method of any of clauses 1-6, wherein determining the display parameter comprises:
   determining a brightness for at least a portion of a content item during the segment.
8. The method of any of clauses 1-7, wherein determining the display parameter comprises:
   determining a brightness for at least a portion of the XR environment separate from the content item during the segment.
9. The method of any of clauses 1-8, wherein determining the display parameter comprises:
   determining a mapping of the content item to a dynamic range used to display the view.
10. The method of any of clauses 1-9, wherein determining the display parameter comprises:
   determining a change to contrast used in the view during the segment;
   determining a change to a black level used in the view during the segment; or
   determining a change to a color of at least a portion of the content during the segment.
11. The method of any of clauses 1-10, wherein determining the display parameter comprises:
   determining a change to tinting of the view during the segment.
12. The method of any of clauses 1-10, wherein determining the display parameter comprises:
   determining a light-spill affect to apply in the view during the segment.
13. The method of any of clauses 1-12, further comprising:
   identifying an environment characteristic of the XR environment,
   wherein the display parameter of the view is determined based on the environment characteristic.
14. The method of clause 13, wherein the environment characteristic is a peak brightness, a minimum brightness, or an average brightness of portions of the view separate from the content item.
15. The method of any of clauses 1-14, wherein optical artifact is a result of light leakage in a catadioptric lens of an optical module of the display.
16. The method of any of clauses 1-15, further comprising:
   identifying a gaze direction; and
   identifying a portion of the view associated with peripheral vision based on the gaze direction; and
   wherein the display parameter of the view is determined based on the portion of the view associated with peripheral vision, wherein the display parameter reducing brightness of the portion of the view associated with peripheral vision.
17. The method of any of clauses 1-15, further comprising:
   identifying a gaze direction; and
   identifying a portion of the view associated with peripheral vision based on the gaze direction; and
   wherein the display parameter of the view is determined based on the portion of the view associated with peripheral vision, wherein the display parameter performs contrast flattening on the portion of the view associated with peripheral vision.
18. The method of any of clauses 1-16, further comprising:
   identifying an optical module characteristic based on 3D modeling of an optical module of the display,
   wherein the display parameter of the view is determined based on the optical module characteristic.
19. The method of any of clauses 1-18, wherein
   the content item occupies an entirety of the view; and
   determining the display parameter comprises adjusting display of the content item.
20. The method of any of clauses 1-18, wherein:
   the content item is displayed at a 2D position within the XR environment;
   the view depicts portions of the XR environment around the content item based on a current 3D viewpoint within the XR environment; and
   determining the display parameter comprises adjusting display of the content item.
21. The method of any of clauses 1-18, wherein:
   the content item is displayed at a 2D position within the XR environment;
   the view depicts portions of the XR environment around the content item based on a current 3D viewpoint within the XR environment; and
   determining the display parameter comprises adjusting display of the portions of the XR environment around the content item.
22. The method of any of clauses 1-21 further comprising determining different display parameters for the view during different segments of the content item based on different visual characteristics during the different segments.
23. A system comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the one or more processors to perform any one of the methods of clauses 1-22.
24. A non-transitory computer-readable storage medium storing program instructions executable via one or more processors to perform the operations of any one of the methods of clauses 1-22.
25. A method comprising:
   at a head mounted device (HMD) having a processor and a display:
   obtaining a content item to render within a view of an extended reality (XR) environment;
   predicting a characteristic of an optical artifact of the content item, wherein the characteristic of the optical artifact is predicted based on modeling light paths using a 3D model of an optical module of the HMD and an eye position;
   based on the predicted characteristic, determining a display parameter of the view to mitigate an appearance of the optical artifact; and
   presenting, via the display, the view with the content item within the XR environment in accordance with the determined display parameter.
26. The method of clause 25, wherein determining the display parameter comprises:
   determining a brightness for at least a portion of a content item during the segment.
27. The method of any of clauses 25-26, wherein determining the display parameter comprises:
   determining a brightness for at least a portion of the XR environment separate from the content item during the segment.
28. The method of any of clauses 25-27, wherein determining the display parameter comprises:
   determining a mapping of the content item to a dynamic range used to display the view.
29. The method of any of clauses 25-27, wherein determining the display parameter comprises:
   determining a change to contrast used in the view during the segment;
   determining a change to a black level used in the view during the segment; or
   determining a change to a color of at least a portion of the content during the segment.
30. The method of any of clauses 25-29, wherein determining the display parameter comprises:
   determining a change to tinting of the view during the segment.
31. The method of any of clauses 25-30, wherein determining the display parameter comprises:
   determining a light-spill affect to apply in the view during the segment.
32. The method of any of clauses 25-31, wherein optical artifact is a result of light leakage in a catadioptric lens of the optical module.
33. The method of any of clauses 25-32, further comprising:
   identifying a gaze direction; and
   identifying a portion of the view associated with peripheral vision based on the gaze direction; and
   wherein the display parameter of the view is determined based on the portion of the view associated with peripheral vision, wherein the display parameter reducing brightness of the portion of the view associated with peripheral vision.
34. The method of any of clauses 25-33, further comprising:
   identifying a gaze direction; and
   identifying a portion of the view associated with peripheral vision based on the gaze direction; and
   wherein the display parameter of the view is determined based on the portion of the view associated with peripheral vision, wherein the display parameter performs contrast flattening on the portion of the view associated with peripheral vision.
35. The method of any of clauses 25-34, wherein
   the content item occupies an entirety of the view; and
   determining the display parameter comprises adjusting display of the content item.
36. The method of any of clauses 25-34, wherein:
   the content item is displayed at a 2D position within the XR environment;
   the view depicts portions of the XR environment around the content item based on a current 3D viewpoint within the XR environment; and
   determining the display parameter comprises adjusting display of the content item.
37. The method of any of clauses 25-34, wherein:
   the content item is displayed at a 2D position within the XR environment;
   the view depicts portions of the XR environment around the content item based on a current 3D viewpoint within the XR environment; and
   determining the display parameter comprises adjusting display of the portions of the XR environment around the content item.
38. The method of any of clauses 25-37 further comprising determining different display parameters for the view during different segments of the content item based on different optical artifact characteristics during the different segments.
39. A system comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the one or more processors to perform any one of the methods of clauses 25-38.
40. A non-transitory computer-readable storage medium storing program instructions executable via one or more processors to perform the operations of any one of the methods of clauses 25-38.
41. A method comprising:
   at a head mounted device (HMD) having a processor and a display:
   obtaining a content item to render within a view of an extended reality (XR) environment;
   identifying a gaze direction of a user of the HMD;
   identifying a portion of the view associated with peripheral vision based on the gaze direction; and
   presenting, via the display, the view with content item within the XR environment, wherein the portion of the view associated with peripheral vision is adjusted according to a display parameter, the display parameter specifying flattening contrast within the portion of the view associated with peripheral vision.
42. The method of clause 41, wherein the display parameter additionally specifies reducing brightness of the portion of the view associated with peripheral vision.
43. The method of any of clauses 41-42, wherein flattening contrast within the portion of the view associated with peripheral vision comprises suppressing local contrast within the portion of the view associated with peripheral vision.
44. The method of any of clauses 41-43, wherein the portion of the view associated with peripheral vision is adjusted using a nonlinear curve defining an alpha multiplier to reduce pixel brightness of pixel based on distance from a foveal region of the view.
45. The method of any of clauses 41-43, wherein the portion of the view associated with peripheral vision is adjusted using an alpha multiplier to flatten contrast.
46. The method of any of clauses 41-43, wherein the portion of the view associated with peripheral vision is adjusted:
   using a nonlinear curve defining a first multiplier to reduce pixel brightness of pixel based on distance from a foveal region of the view; and
   using a second multiplier to flatten contrast.
47. The method of any of clauses 41-45 further comprising adjusting the view over time to provide a smooth transition between gaze-based dimming curves that are adjusted over time to change an amount of dimming applied to the portion of the view associated with peripheral vision.
48. The method of any of clauses 41-47 further comprising adjusting the view over time to account for detect blink or saccade user activity.
50. The method of any of clauses 41-48 further comprising adjusting an amount of contrast flattening based on a user-specific characteristic.
51. The method of clause 50, wherein the user-specific characteristic is near-sightedness.
52. The method of clause 50, wherein the user-specific characteristic is eye-convergence inaccuracy.
53. A system comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the one or more processors to perform any one of the methods of clauses 41-52.
54. A non-transitory computer-readable storage medium storing program instructions executable via one or more processors to perform the operations of any one of the methods of clauses 41-52.

## Claims

1. A method comprising:
at a head mounted device (HMD) having a processor and a display:
obtaining a content item to render within a view of an extended reality (XR) environment;
identifying a visual characteristic of the content item;
determining a display parameter of the view to mitigate an appearance of an optical artifact associated with the identified visual characteristic; and
presenting, via the display, the view with the content item within the XR environment in accordance with the determined display parameter.

2. The method of claim 1, wherein the visual characteristic is:
a peak brightness of the segment; or
a minimum brightness of the segment.

3. The method of claim 1, wherein the visual characteristic is:
a histogram corresponding to brightness of multiple portions of a frame of the segment, or a type of the content item.

4. The method of claim 1, wherein the visual characteristic is determined based on metadata stored in the content item or metadata stored separately from the content item and associated with the content item.

5. The method of any of claims 1-4, wherein the visual characteristic depends on a current viewpoint used to provide the view.

6. The method of any of claims 1-5, wherein the content item comprises time-ordered media frames and determining the visual characteristic comprises evaluating the content item on a frame-by-frame or scene-by-scene basis.

7. The method of any of claims 1-6, wherein determining the display parameter comprises:
determining a brightness for at least a portion of a content item during the segment.

8. The method of any of claims 1-7, wherein determining the display parameter comprises:
determining a brightness for at least a portion of the XR environment separate from the content item during the segment.

9. The method of any of claims 1-8, wherein determining the display parameter comprises:
determining a mapping of the content item to a dynamic range used to display the view.

10. The method of any of claims 1-9, wherein determining the display parameter comprises:
determining a change to contrast used in the view during the segment;
determining a change to a black level used in the view during the segment;
determining a change to a color of at least a portion of the content during the segment; or
determining a change to tinting of the view during the segment.

11. The method of any of claims 1-10, wherein determining the display parameter comprises:
determining a light-spill affect to apply in the view during the segment.

12. The method of any of claims 1-11, further comprising:
identifying an environment characteristic of the XR environment, wherein the display parameter of the view is determined based on the environment characteristic, wherein the environment characteristic is a peak brightness, a minimum brightness, or an average brightness of portions of the view separate from the content item.

13. The method of any of claims 1-12, wherein optical artifact is a result of light leakage in a catadioptric lens of an optical module of the display.

14. A system comprising:
a non-transitory computer-readable storage medium; and
one or more processors coupled to the non-transitory computer-readable storage medium, wherein the non-transitory computer-readable storage medium comprises program instructions that, when executed on the one or more processors, cause the one or more processors to perform any one of the methods of claims 1-13.

15. A non-transitory computer-readable storage medium storing program instructions executable via one or more processors to perform the operations of any one of the methods of claims 1-13.
